# EUROPÄISCHE PATENTSCHRIFT

(11) **EP 1 918 694 B1**
(45) Veröffentlichungstag und Bekanntmachung des Hinweises auf die Patenterteilung: **08.04.2009**
(21) Anmeldenummer: 07019422.0
(22) Anmeldetag: 04.10.2007
(51) Int. Cl.: G01N 21/71

(54) **Verfahren zum Nachweis der Veränderung einer Population von Partikeln in einer Lösung**
Method for detecting a change in the population of particles in a solution
Procédé pour détecter la modification d'une population de particules dans une solution

(30) Priorität: 31.10.2006 DE 102006051227
(43) Veröffentlichungstag der Anmeldung: 07.05.2008
(73) Patentinhaber: Forschungszentrum Karlsruhe GmbH, 76133 Karlsruhe (DE)
(72) Erfinder: Wagner, Tobias, Dr., 76351 Linkenheim (DE)

(56) Entgegenhaltungen:
- DE-C1- 19 833 339
- US-A- 5 316 983
- US-A- 5 446 538
- SCHERBAUM F J ET AL: "COUNTING PF PARTICLES IN AQUEOUS SOLUTIONS BY LASER-INDUCED PHOTOACOUSTIC BREAKDOWN DETECTION" APPLIED PHYSICS B: LASERS AND OPTICS, SPRINGER INTERNATIONAL, BERLIN, DE, Bd. B63, Nr. 3, 1. September 1996 (1996-09-01), Seiten 299-306, XP000623692 ISSN: 0946-2171
- T. U. WAGNER ET AL.: "Laser-induced Breakdown Detection (LIBD) for the Highly Sensitive Quantification of Aquatic Colloids. Part II: Experimental Setup of LIBD and Applications" PARTICLE & PARTICLE SYSTEMS CHARACTERIZATION, Bd. 22, 2005, Seiten 181-191, XP002467141
- T. BUNDSCHUH ET AL.: "Hochsensitive Partikelbestimmung mittels der laser induzierten Breakdown-Detektion" CHEMIE INGENIEUR TECHNIK, Bd. 75, April 2003 (2003-04), Seiten 386-390, XP002467142 Weinheim
- T. WAGNER ET AL.: "Investigation of Colloidal water Content with Laser-induced Breakdown Detection during Drinking Water Purification." ACTA HYDROCHIMICA HYDROBIOLOGICA, Bd. 30, 2002, Seiten 266-274, XP002467143

## Beschreibung

Die vorliegende Erfindung betrifft ein Verfahren zum Nachweis der Veränderung einer Population von Partikeln in einer Lösung auf Basis des LIBD Verfahrens.

Der Zustand einer Partikelpopulation in einer Lösung ist durch die Anzahl der Partikel, sowie die Größe und Größenverteilung der Partikel charakterisiert. Ein Verfahren zum Nachweis von Partikeln in Lösungen basiert auf der Methode der Laser-Induzierten Breakdown-Detektion (LIBD), wie sie in der DE 198 33 339 C1 beschrieben ist. Dabei ist die gleichzeitige Anwendung einer geeigneten Fraktionierungstechnik wie z.B. der Feld-Fluss-Fraktionierung (FFF) erforderlich. Im Gegensatz zu konkurrierenden Lichtstreu- oder Lichtabschattungs-Methoden ist das LIBD Verfahren bei Partikeln < 100 nm um 4 - 6 Größenordnungen empfindlicher.

Die LIBD basiert auf der Erzeugung und Zählung von Plasmaemissionen an feinstverteilten Partikeln in Flüssigkeiten, so genannten Breakdown-Ereignissen. Die erforderliche Laserpulsleistungsdichte zur Erzeugung von Plasmaereignissen ist für Feststoffe niedriger als für flüssige oder gasförmige Materie. Nach T. Bundschuh, T. Wagner und R. Köster, Hochsensitive Partikelbestimmung mittels der Laser induzierten Breakdown-Detektion, Chem. Ing. Technik, Vol.75, S. 386-390, 2003, können daher durch eine geeignete Wahl der Laserpulsenergie selektiv Plasmen an Feststoffen in Flüssigkeiten oder Gasen erzeugt werden.

Mittels eines Bildverarbeitungssystems werden, wie in der DE 198 33 339 C1 beschrieben, die Partikelgrößen aufgezeichnet und die Verteilung der Ereignisse längs der Laserstrahlachse ermittelt. Die Ausdehnung dieser Verteilung steht in direkter Abhängigkeit zur Partikelgröße. Die Partikelkonzentration lässt sich aus der mittleren Partikelgröße und der Häufigkeit der Breakdown-Ereignisse berechnen.

Die Wahl der Laserpulsenergie ist entscheidend und wird in der Regel über Vorversuche durchgeführt. Eine zu hohe Laserpulsenergie hat zur Folge, dass kleinere Partikel, die insbesondere bei natürlichen Messproben mengenmäßig dominieren und daher starke Signale erzeugen, ein Übersteuern des Detektors verursachen. Eine zu niedrige Laserpulsenergie führt hingegen zu einer niedrigeren Nachweisempfindlichkeit gegenüber größeren Partikeln, die in der Regel in vergleichsweise geringer Anzahl vorliegen, so dass diese nicht mehr zuverlässig detektiert werden können.

Ein Verfahren zur Laser-Emissions-Spektroskopie bei dem ein Messobjekt mit einem gepulsten Laserstrahl bestrahlt wird, wobei der Laserstrahl auf bzw. in das Messobjekt fokussiert wird und an bzw. in dem Messobjekt Plasmaemissionen erzeugt werden, ist aus der US 54 46 538 A ersichtlich. Bei diesem Verfahren, das bevorzugt zur quantitativen Materialanalyse eingesetzt wird, werden Plasmaemissionen mittels eines optischen Detektors erfasst, wobei bestimmte Parameter der Plasmaemissionen auf bestimmten Werten oder in bestimmten Wertebereichen gehalten werden und bei Abweichungen die Laserpulsenergie entsprechend verändert wird. Die Abweichungen werden mittels eines Signals von einem Plasma-Parameter-Sensor durch eine Vergleichseinheit festgestellt.

Ausgehend davon liegt die Aufgabe der Erfindung darin, ein Verfahren vorzuschlagen, das die aufgeführten Nachteile und Einschränkungen vermeidet. Insbesondere soll die Nachweisempfindlichkeit gegenüber bisher nicht, oder nur mit geringer Empfindlichkeit, detektierbaren Partikeln erhöht werden und der Nachweis von Veränderungen in Partikelpopulationen in einer Lösung ermöglicht werden.

Gelöst wird diese Aufgabe durch ein Verfahren mit den Merkmalen nach Anspruch 1. Die Unteransprüche geben vorteilhafte Ausgestaltungen des Verfahrens an.

Zur Lösung der Aufgabe wird ein Verfahren zum Nachweis von Veränderungen in Partikelpopulationen in einer Lösung vorgeschlagen, bei dem auf Basis des LIBD Verfahrens durch dynamische Anpassung der Laserpulsenergie (sog. Energieprogression) eine Anzahl von Plasmaereignissen pro Laserpulszahl (Breakdown-Häufigkeit) erzeugt wird, die innerhalb festgelegter Schranken liegt.

Ein wesentlicher Grundgedanke des Verfahrens beinhaltet den Zusammenhang, dass durch Variation der Energie der Laserpulse die Empfindlichkeit des Detektors angepasst werden kann. Ändert sich die Partikelpopulation, die durch das Messvolumen strömt, wird die Laserpulsenergie so angepasst, dass die Breakdown-Häufigkeit innerhalb des bevorzugten Bereichs bleibt, der durch

eine obere und eine untere Schranke charakterisiert ist. Wird eine Breakdown-Häufigkeit detektiert, die außerhalb des bevorzugten Bereichs liegt, wird sie durch Variation der Laserpulsenergie in diesen Bereich zurückgeführt. Bevorzugte Werte für die untere Schranke liegen zwischen 0,3 und 0,9. Bevorzugte Werte für die obere Schranke liegen zwischen 0,5 und 0,95. Der Wert der unteren Schranke muss dabei stets unter dem Wert der oberen Schranke liegen. Die Differenz zwischen oberer und unterer Schranke liegt bevorzugt bei Werten zwischen 0,005 und 0,03. Besonders bevorzugt ist eine Differenz zwischen oberer und unter Schranke mit Werten zwischen 0,01 und 0,02.

Eine geeignete Vorrichtung zur Durchführung des Verfahrens ist eine Instrumentierung, wie sie aus der DE 198 33 339 C1 und aus Bundschuh et. al. bekannt ist, erweitert um eine für den Zweck der Energieregelung entwickelte Soft- und Regelhardware, sowie die Implementierung mathematischer Regelalgorithmen.

Durch das Verfahren können kleine Partikeln neben großen Partikeln zuverlässig detektiert werden, ohne dass es zu einem signifikanten Übersteuern des Detektors kommt. Weiterhin können durch das Verfahren Änderungen der Größe und der Konzentration von Partikeln detektiert werden. Gegenüber bisherigen Verfahren, bei denen die Breakdown-Häufigkeit als Funktion der Zeit aufgezeichnet wird, wird ein signifikant besserer Dynamikbereich von mindestens 1-2 Größenordnungen erreicht.

Neben der Detektion von Partikeln und dem Nachweis von Veränderungen von Partikelpopulationen kann das Verfahren in Kombination mit einem Partikelfraktionierungs-Verfahren auch zur Bestimmung der Partikelgrößenverteilung eingesetzt werden.

Eine weitere Anwendung des Verfahrens betrifft die stetige Überwachung der partikulären Fracht in Fluiden, die durch den signifikant größeren Dynamikbereich infolge der Energieprogression entsteht. Derartige Überwachungen der partikulären Fracht kommen beispielsweise bei der Trinkwasseraufbereitung, in der Halbleiterherstellung, bei der Herstellung von Pharma-Artikeln oder Hydraulikflüssigkeiten zur Anwendung, wo eine festgelegte Schwelle an Partikeln nicht überschritten werden soll.

Ebenfalls vorteilhaft einzusetzen ist das Verfahren bei der Sickerwasserprognose. Hier wird der partikuläre Austrag aus Abfallstoffen der Müllverbrennung untersucht, die als Recyclingstoffe im Straßenbau eingesetzt werden. Dazu wird das zerkleinerte Müllverbrennungsprodukt in eine dem Verfahren vorgeschaltete Säule eingebracht und eluiert. Der Eluent fließt anschließend durch eine Durchflussmesszelle und wird charakterisiert.

Der Nachweis der Koagulation von Nano-Partikeln, z.B. bei der Bildung von Polymeren, oder z.B. die Entstehung von Kolloiden bei der Flockungsfällung mittels Eisen- oder Aluminiumsalzen in der Trinkwasseraufbereitung, ist eine weitere Anwendungsmöglichkeit des Verfahrens. Die Bildung größerer Aggregate kann mittels des Verfahrens bereits unmittelbar nach der Entstehung kleinster Keime verfolgt werden, da die Energieprogression einen größeren Beobachtungsbereich des Verfahrens ermöglicht.

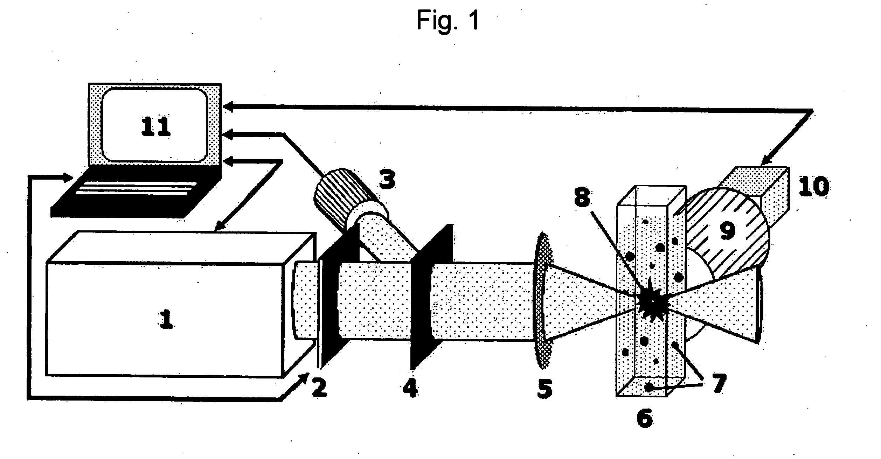

Die Erfindung wird mit einem Ausführungsbeispiel anhand der Figuren näher erläutert. Fig. 1 zeigt den prinzipiellen Aufbau einer Vorrichtung zur Durchführung des Verfahrens.

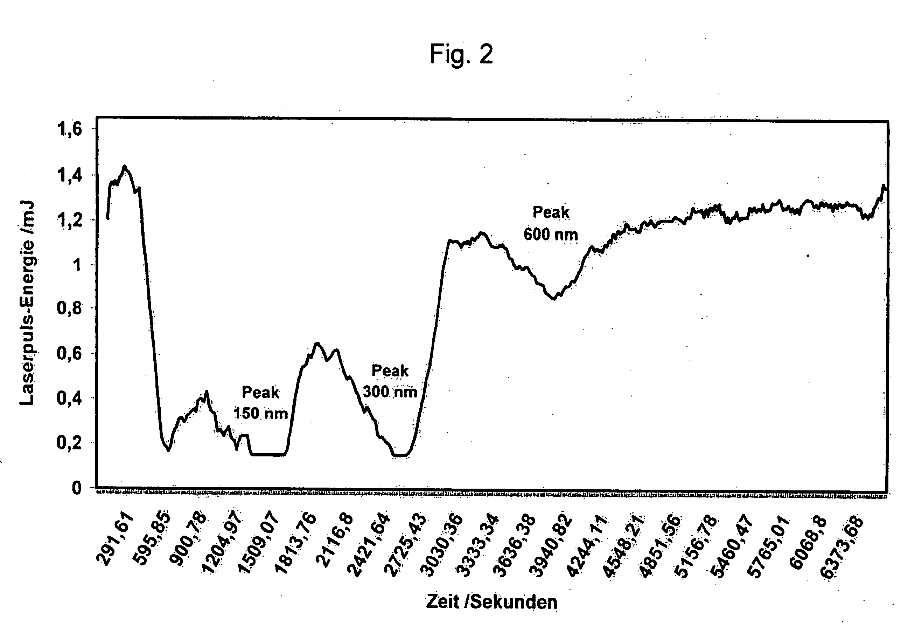

Mittels eines gepulsten Lasers 1 wird die Plasmaerzeugung 8 an den Partikeln 7 im Messvolumen 6 angeregt. Die Energie des Laserpulses wird dabei durch eine elektronische oder elektromechanische Energieregeleinheit 2 geregelt. Ein Strahlteiler 4 koppelt einen Teil des Laserlichts aus und leitet diesen auf einen kalibrierten Energiedetektor 3, der mit einem Computer 11 zur Datenaufzeichnung und der Energieregeleinheit 2 verbunden ist. Der andere Teil des Laserstrahls wird über eine Linse oder ein Linsensystem 5 in das Messvolumen 6 fokussiert. Die erzeugten Plasmaereignisse 8 werden durch optische Komponenten 9 zu einer Kamera 10 geleitet und mittels dieser aufgezeichnet. Die Aufzeichnungen der Kamera 10 werden an den Computer 11 geleitet, der die Laserpulsenergie (siehe Fig. 2) als Funktionen der Zeit aufzeichnet und speichert. In Fig. 2 ist die Laserpuls-Energie in Millijoule als Funktion der Zeit in Sekunden dargestellt, wie sie für eine Lösung mit einem Gemisch aus Partikeln verschiedener Größen aufgezeichnet wurde.

Die Anzahl der Plasmaereignisse pro Anzahl der Laserpulse (Breakdown-Häufigkeit) wird durch eine Software mit den festgelegten Schranken verglichen. Liegt der Wert der Breakdown-Häufigkeit innerhalb der festgelegten Schranken, wird die Plasmaerzeugung mit unveränderter Laserpulsenergie fortgesetzt.

Liegt der Wert der Breakdown-Häufigkeit außerhalb einer der Schranken, wird die Laserpulsenergie entsprechend angepasst. Wird ein Überschreiten der oberen Schranke detektiert, wird die Laserpulsenergie über einen mathematischen Algorithmus abgesenkt, während ein Unterschreiten der unteren Schranke eine Erhöhung der Laserpulsenergie zur Folge hat. Als untere Schranke für die Breakdown-Häufigkeit wurde ein Wert von 0,69 eingesetzt, während für die obere Schranke der Breakdown-Häufigkeit ein Wert von 0,71 eingesetzt wurde.

### Bezugszeichenliste

- 1: Laser
- 2: Energieregeleinheit
- 3: Kalibrierter Energiedetektor
- 4: Strahlteiler
- 5: Linse oder Linsensystem
- 6: Messvolumen
- 7: Partikel
- 8: Plasmaerzeugung
- 9: Optische Komponenten
- 10: Kamera
- 11: Computer

## Patentansprüche

1. Verfahren zum Nachweis der Veränderung einer Population von Partikeln in einer Lösung mit folgenden Verfahrensschritten:
a) Durchstrahlen eines Messvolumens, in dem sich die Lösung mit Partikeln befindet, mit einem gepulsten Laserstrahl, wobei der Laserstrahl in das Messvolumen fokussiert wird, und wobei an den Partikeln Plasmaemissionen erzeugt werden,
b) Erfassen der einzelnen Plasmaemissionen bei einer statistisch relevanten Anzahl von Laserpulsen mittels eines optischen oder akustischen Detektors, **dadurch gekennzeichnet, daß** die Anzahl der erfassten Plasmaemissionen pro Anzahl der Laserpulse innerhalb einer festgelegten unteren Schranke und einer festgelegten oberen Schranke gehalten wird und bei Abweichungen die Laserpulsenergie entsprechend verändert wird, und daß
c) die Änderungen der Energie des Laserpulses als Funktion der Zeit aufgezeichnet werden, wodurch Veränderungen der Population von Partikeln im Messvolumen nachgewiesen werden.

2. Verfahren nach Anspruch 1, **dadurch gekennzeichnet, dass** für die untere Schranke ein Wert zwischen 0,30 und 0,90 und für die obere Schranke ein Wert zwischen 0,50 und 0,95 gewählt wird, wobei der Wert der unteren Schranke jeweils so gewählt wird, dass er kleiner ist als der Wert der oberen Schranke.

3. Verfahren nach Anspruch 2, **dadurch gekennzeichnet, dass** für die Differenz zwischen der oberen Schranke und der unteren Schranke ein Wert zwischen 0,005 und 0,03 gewählt wird.

4. Verfahren nach einem der Ansprüche 1 bis 3, **dadurch gekennzeichnet, dass** die Partikeln fraktioniert werden, bevor sie in das Messvolumen eingebracht werden.

5. Verfahren nach einem der Ansprüche 1 bis 4 zur Überwachung der partikulären Fracht in Fluiden.

6. Verfahren nach einem der Ansprüche 1 bis 5 zum Nachweis der Koagulation von Partikeln in Lösungen.

7. Verfahren nach Anspruch 6 zum Nachweis der Polymerisierung von Monomeren in Lösungen.

## Claims

1. Method of detecting the change in a population of particles in a solution, said method having the following method steps:
a) irradiating a measuring volume, in which the solution with particles is situated, with a pulsed laser beam, the laser beam being focused into the measuring volume, and plasma emissions being generated at the particles,
b) determining the individual plasma emissions with a statically relevant number of laser pulses by means of an optical or acoustic detector, **characterised in that** the number of determined plasma emissions per number of laser pulses is kept within a fixed lower range and a fixed upper range, and, if there are any deviations, the laser pulse energy is changed accordingly, and **in that**
c) the changes in the energy of the laser pulse are indicated as a function of time, changes in the population of particles in the measuring volume being detected.

2. Method according to claim 1, **characterised in that** a value of between 0.30 and 0.90 is selected for the lower range, and a value of between 0.50 and 0.95 is selected for the upper range, the value of the lower range being respectively selected so that it is smaller than the value of the upper range.

3. Method according to claim 2, **characterised in that** a value of between 0.005 and 0.03 is selected for the difference between the upper range and the lower range.

4. Method according to one of claims 1 to 3, **characterised in that** the particles are fractionated before there are introduced into the measuring volume.

5. Method according to one of claims 1 to 4 for monitoring the particulate load in fluids.

6. Method according to one of claims 1 to 5 for detecting the coagulation of particles in solutions.

7. Method according to claim 6 for detecting the polymerisation of monomers in solutions.

## Revendications

1. Procédé pour détecter la modification d'une population de particules dans une solution comportant les étapes consistant à :
a) irradier un volume de mesure dans lequel se trouve la solution renfermant les particules avec un faisceau laser pulsé, le faisceau laser étant focalisé dans le volume de mesure et des émissions de plasma étant produites sur les particules,
b) détecter les différentes émissions de plasma sur un nombre statistiquement important d'impulsions laser au moyen d'un détecteur optique ou acoustique,
**caractérisé en ce qu'**
on maintient le nombre d'émissions de plasma détectées selon le nombre d'impulsions laser dans une limite inférieure déterminée et une limite supérieure déterminée, et en présence d'écarts on fait varier en conséquence l'énergie de l'impulsion laser, et
c) on enregistre les variations de l'énergie de l'impulsion laser en tant que fonction du temps, de façon à permettre de détecter des variations de la population de particules dans le volume de mesure.

2. Procédé selon la revendication 1,
**caractérisé en ce qu'**
on choisit pour la limite inférieure une valeur comprise entre 0,30 et 0,90 et pour la limite supérieure une valeur comprise entre 0,50 et 0,95, la valeur de la limite inférieure étant à chaque fois choisie de façon à être inférieure à la valeur de la limite supérieure.

3. Procédé selon la revendication 2,
**caractérisé en ce que**
pour la différence entre la limite supérieure et la limite inférieure on choisit une valeur comprise entre 0,005 et 0,03.

4. Procédé selon l'une des revendications 1 à 3,
**caractérisé en ce qu'**
on fractionne les particules avant de les introduire dans le volume de mesure.

5. Procédé selon l'une des revendications 1 à 4, pour surveiller la charge de particules dans des fluides.

6. Procédé selon l'une des revendications 1 à 5, pour détecter la coagulation de particules dans des solutions.

7. Procédé selon la revendication 6, pour détecter la polymérisation de monomères dans des solutions.
